# EUROPÄISCHE PATENTSCHRIFT

(11) **EP 1 686 109 B1**
(45) Veröffentlichungstag und Bekanntmachung des Hinweises auf die Patenterteilung: **07.01.2015**
(21) Anmeldenummer: 06002065.8
(22) Anmeldetag: 01.02.2006
(51) Int. Cl.: C04B 41/65, C04B 28/02

(54) **Beschichtung für zementgebundene Untergründe**
Coating for cement-bonded substrates
Revêtement pour substrats cimentaires

(30) Priorität: 01.02.2005 DE 102005004625; 19.04.2005 DE 102005018035
(43) Veröffentlichungstag der Anmeldung: 02.08.2006
(73) Patentinhaber: Greiner, Barbara, Dipl.-Ing., 88353 Kißlegg (DE)
(72) Erfinder: Stahl, Andreas, 88353 Kisslegg (DE)
(74) Vertreter: Grape & Schwarzensteiner

(56) Entgegenhaltungen:
- GB-A- 340 770
- GB-A- 2 330 847
- TECHNISCHES KOMITEE "WASSERSPEICHERUNG" DES DVGW: "Herstellung dauerhafter Oberflächen in Trinkwasserbehältern aus zementgebundenen Mörteln" SONDERDRUCK ENERGIE WASSER PRAXIS, Bd. 53, Nr. 3, 2002, Seiten 1-5, XP002453853

## Beschreibung

Die Erfindung betrifft eine Beschichtung für zementgebundene Untergründe, insbesondere von Trinkwasserbehältern oder anderen wasserberührten Flächen.

Die Beschichtung selbst ist aus zementgebundenen Werkstoffen gebildet. Die Erfindung betrifft auch ein Verfahren zur Herstellung der Beschichtung.

Unter zementgebundenen Werkstoffen versteht man mineralische Mischungen mit einem hohen Gehalt an Zement, so dass dessen wesentliche Eigenschaft, das hydraulische Erhärten, zum Tragen kommt. Zement, mit Wasser angemacht, erhärtet sowohl an der Luft, als auch unter Wasser und bleibt unter Wasser fest. Diese zementgebundenen Werkstoffe beinhalten ferner Zuschlagsstoffe, wie hydraulischen Kalk und Pigmente, letztere insbesondere zur Farbgebung.

Die Innenflächen moderner Trinkwasserbehälter, die üblicherweise aus Beton gefertigt sind, werden aus hygienischen, technischen und optischen Gründen mit zementgebundenen Werkstoffen beschichtet. Hierbei wird die desinfizierende, d.h. keimtötende, Wirkung solcher zementgebundener Werkstoffe ebenso genutzt, wie die Tatsache, dass sich auf glatten Oberflächen weniger Keime ansiedeln können und eine helle gleichmäßige Oberfläche einen sauberen und hygienischen Eindruck erweckt. Außerdem sind solche glatten Oberflächen sehr reinigungsfreundlich.

Es hat sich herausgestellt, dass derartige Oberflächenbeschichtungen in dauerhaftem Kontakt mit insbesondere Trinkwasser manchmal binnen kürzester Zeit Schädigungen in Form von unansehnlichen, fleckenförmigen Verfärbungen aufweisen. Die beschädigten Stellen in der Behälterwand zeichnen sich dadurch aus, dass sie im Vergleich zur gewohnten Festigkeit der Betonwandung an Festigkeit verlieren und sich mühelos mit einem stumpfen Gegenstand abkratzen lassen. Bei besonders schadhaften Stellen wurde bei Beseitigung des aufgeweichten Materials sogar die Bewehrung des Behälters freigelegt.

Dieses Phänomen wurde bei Estrichen, Putzen und Beton festgestellt.

Es ist davon auszugehen, dass Ursache hierfür Auslaugungsprozesse und/oder hydrolytische Korrosion sind. Bei beiden Prozessen werden Ionen in die zementgebundene Beschichtung hinein oder aus dieser heraus transportiert. Als Folge dieses Ionentransportes, der durch Wirkung elektrischer Felder beschleunigt werden kann, baut sich der zementgebundene Werkstoff ab.

Es darf in diesem Zusammenhang auf die Veröffentlichungen von R. Müller und F. Tanner "Betonschäden in Trinkwasserreservoirs", Sonderdruck Nr. 1311 aus gwa 10/93, Schweizerischer Verein des Gas- und Wasserfaches (SVGW), Zürich und von A. Gerdes und F.H. Wittmann "Beständigkeit zementgebundener Beschichtungen unter dem Einfluss elektrischer Felder", Internationale Zeitschrift für Bauinstandsetzen, 1. Jahrgang, Heft 1, Januar 1995, AEDIFICATIO Verlag verwiesen werden.

Die hydrolytische Korrosion der zementgebundenen Werkstoffe wurde von A. Gerdes "Hydrolyse einer zementgebundenen Beschichtung in ständigem Kontakt mit Wasser", 5. Internationales Kolloquium, Werkstoffwissenschaften und Bauinstandsetzen-"MSR 99", Esslingen, November/Dezember 1999, Seiten 695 bis 706, AEDIFICATIO Verlag wie folgt erläutert:
"Demnach wird die hydrolytische Korrosion durch die Wanderung von Hydrogencarbonationen aus dem Wasser in die Beschichtung und durch die Wanderung von Natrium- und Kaliumionen aus der Beschichtung in das Wasser ausgelöst. Das ist aufgrund der Porosität der Beschichtung möglich. Treibende Kraft ist der Konzentrationsunterschied zwischen Porenlösung und Trinkwasser.

Das Calciumcarbonat/Hydrogencarbonat-Gleichgewicht ist pHabhängig. In Trinkwasser, das einen neutralen pH-Wert von 7 aufweist, liegt praktisch nur Hydrogencarbonat vor. Im Gegensatz dazu ist bei einem pH-Wert von etwa 12 das Calciumcarbonat die stabile Form.

Hydrogencarbonationen werden daher beim Übergang aus dem Trinkwasser in die Beschichtung vollständig in Carbonat (Calciumcarbonat) umgewandelt und in der Beschichtung abgeschieden. Durch diese Neutralisations- und Fällungsreaktion wird auch das bei der Zementhydratation gebildete Calciumhydroxid in Calciumcarbonat umgewandelt. Durch die Umwandlung von Calciumhydroxid in Calciumcarbonat, sinkt der pH-Wert in der Porenlösung der Beschichtung. Unter diesen Bedingungen sind die Hydratphasen nicht länger beständig.

Um den pH-Wert zu stabilisieren, setzt daher vor allem das CSH-Gel chemisch gebundenes Calciumhydroxid frei. Da dieses Calciumhydroxid wieder zu Calciumcarbonat umgesetzt wird, führt dieser Transportprozess letztendlich zu einer völligen Auslaugung des CSH-Gels unter Bildung von amorphem Siliciumdioxid."

Im Sonderdruck Energie Wasser Praxis aus 03/2002 wird erläutert, dass die Porosität einer ausgebildeten Beschichtung deren Beständigkeit beeinflussen kann.

Die GB 2 330 847 A beschreibt ein Verfahren zum Versiegeln einer porösen Schicht, z.B. der Wand eines Beckens, indem die Schicht mit einer Mischung aus einem lehmhaltigen Material und auf Natrium basierenden Salzen in Wasser behandelt wird, indem diese Mischung solange in die Poren eindringen gelassen wird, bis diese versiegelt sind.

Lösungsvorschläge, um das oben erwähnte Anlage- und Korrosionsproblem zu liefern sind im Stand der Technik nicht behandelt.

In diesem Zusammenhang wird auf die DE 196 09 892 C2 verwiesen, die sich mit der Lösung dieses Problems beschäftigt, indem in einer Behälterwand mindestens eine in direktem Kontakt mit der Flüssigkeit stehende Elektrode zum Ableiten von Strömen aufgrund eines Potentialunterschiedes zwischen der Flüssigkeit und dem Behälter ohne Fremdstromeinspeisung vorgesehen wird, wobei die Elektrode mit der Stahlbewehrung des Behälters verbunden wird.

Die DE 196 09 892 C2 beschreibt ein Mehrschichtverbundmaterial aus zementgebundenem und polymergebundenem Beton sowie einer dazwischen angeordneten Polymer/Zement-Mischmatrix.

Vor diesem Hintergrund ist es Aufgabe der vorliegenden Erfindung eine stabile Oberflächenbeschichtung für insbesondere Trinkwasserbehälter vorzuschlagen, mit welcher die Phänomene Auslaugung und hydrolytische Korrosion verhindert oder zumindest stark verlangsamt werden können.

Gegenstand der vorliegenden Erfindung ist demnach eine Beschichtung für zementgebundene Untergründe nach Anspruch 1.

Der wesentliche Vorteil einer derart aufgebauten Beschichtung liegt darin, dass mit der Porositätsabstufung der oben beschriebene Transportmechanismus in einer Richtung steuerbar ist, die es erlaubt, Auslaugen und/oder hydrolytische Korrosion der Beschichtung und des darunterliegenden Betons wesentlich zu verlangsamen.

Prinzipiell kann diese Porositätsabstufung innerhalb der Beschichtung mit jedem handelsüblichen mineralischen Zementmörtel eingestellt werden. Es ist jedoch dafür Sorge zu tragen, dass eine äußere, zum Wasser hin gerichtete Zone der Beschichtung eine höhere Dichte, d.h. geringere Porosität aufweist als ein Bereich im Inneren der Beschichtung. Bei einer Schichtdicke d von etwa 15 mm kann dieser dichtere Bereich nur etwa 0,5 mm betragen.

Zur Erzeugung dieses dichteren Bereichs ist darauf zu achten, dass der Wasser/Zement-Wert an der Oberfläche der Beschichtung nicht durch Reiben oder Glätten erhöht wird. In vorteilhafter Weise wird daher zur Verdichtung auf den aufgetragenen zementgebundenen Werkstoff Zement aufgepudert.

In einer vorteilhaften Ausführungsform der vorliegenden Erfindung enthält der zementgebundene Werkstoff weniger als 30 Gew.% Zement.

Damit lässt sich eine Porosität von weniger als 10 Vol.%, vorzugsweise etwa 6 bis 8 Vol.%, in der unverdichteten Schicht erzielen, was einen wesentlichen Einfluss auf die oben beschriebenen Transportprozesse hat.

Es gibt bekanntlich verschiedene Zement-Klinkerphasen, nämlich C₃S (3 CaO·SiO₂), C₂S (2 CaO·SiO₂), C₃A (3 CaO·Al₂O₃), C₂(A,F) (2 CaO (Al₂O₃,Fe₂O₃). Es ist vorteilhaft solche Zemente mit einem hohen Calciumoxidanteil einzusetzen, da diese bei der Zementhydratation die Entwicklung von Calciumhydroxid fördern und damit ein Alkalidepot liefern. Das Alkalidepot, also der damit verbundene hohe pH-Wert (etwa 12) der Beschichtung verzögert die Hydrolyse und begünstigt deren antifungizide Wirkung. Vorzugsweise wird ein Zement mit einem Gehalt an einer C3S-Klinkerphase von mehr als 50% eingesetzt.

In einer weiteren vorteilhaften Ausgestaltung der vorliegenden Erfindung enthält der zementgebundene Werkstoff Calciumcarbonat als Zuschlagsstoff.

Calciumcarbonate sind für die Beschichtungszusammensetzung wesentlich, weil es sich hierbei um sogenannten weichen Zuschlag handelt, so dass das Auftreten von Spannungen an der Grenzfläche Untergrund/Beschichtung weitgehend reduziert wird. Außerdem verfügt Calciumcarbonat in saurer Umgebung über ein ähnliches Auflöseverhalten wie Zementstein, wodurch sich eine gleichmäßigere Abnutzung der Beschichtung erreichen lässt.

Prinzipiell ist die Korngröße des einzusetzenden Calciumcarbonatzuschlags unkritisch. In vorteilhafter Weise ist der Calciumcarbonatzuschlag aber aus Korngrößen einer Sieblinie zusammengesetzt, welche zwischen 0,01 bis 3,00 mm liegt.

Eine Korngrößenverteilung des Zuschlagsstoffes Calciumcarbonat in diesem Bereich trägt dazu bei, dass in der Beschichtung eine günstige Dichteverteilung erzielt werden kann, so dass das Einsetzen einer Auslaugung durch Fehlstellen in Form zu großer Poren vermieden werden kann.

Der für die Beschichtung verwendete zementgebundene Werkstoff umfasst vorteilhafterweise weniger als 1 Gew.% Microsilica.

Microsilica wird zementgebundenen Werkstoffen üblicherweise zu deren Vergütung zugesetzt. Für die erfindungsgemäße Beschichtung muss jedoch der Anteil gering gehalten werden, da sonst über die Schichtdicke d eine zu starke Verdichtung der Beschichtung bei der Hydratation erfolgt und der Ionentransport zur Grenzfläche gebremst wird.

Der für die Beschichtung verwendete zementgebundene Werkstoff sollte weniger als 5 Gew.% eines Pigmentfarbstoffes umfassen. Der Pigmentfarbstoff dient ästhetischen Zwecken. Da ein weißer Anstrich Sauberkeit und Frische vermittelt, wird normalerweise ein weißer Pigmentfarbstoff, wie Titandioxid, verwendet. Dieser unterstützt auch die keimtötende Wirkung. Auch gräuliche oder blaufarbene Pigmente können je nach Einsatzgebiet wünschenswert sein.

Im Gegensatz zu herkömmlichen Beschichtungen beträgt erfindungsgemäß die Schichtdicke 5 bis 30 mm, vorzugsweise 15 mm.

Der Vorteil hierbei liegt nicht nur in der Einfachheit oder Vereinfachung der Herstellung der Beschichtung, sondern im Zusammenwirken mit den anderen erfindungsgemäßen Merkmalen auch in einer vorteilhaften Porengrößenverteilung im abgebundenen Zustand, welche zu erzielen ist. Das Maximum der Porengrößenverteilung sollte kleiner als 0,1 µm sein.

Die Erfindung betrifft auch ein Verfahren zur Verlangsamung oder Verhinderung der Auslaugung und hydrolytischen Korrosion von mit Wasser in Kontakt stehenden zementgebundenen Untergründen gemäß Anspruch 10. Vorteilhafte Maßnahmen ergeben sich aus den Ansprüchen 11 bis 12.

Insbesondere liegt der Wasser/Zement-Wert der aufzutragenden Beschichtung im unabgebundenen Zustand zwischen 0,4 und 0,5.

Bei einem w/z-Wert unter 0,4 wird der angesetzte zusatzmittelfreie Zementmörtelbrei zu zäh und lässt sich schwer verarbeiten. Bei einem w/z-Wert über 0,5 wird die Gesamtporosität und damit die Permeabilität zu hoch.

### Anwendungsbeispiel

Es wird ein zementgebundener Untergrund, zum Beispiel eine Betonwandung eines Trinkwasserbehälters, behandelt.

Dieser Untergrund wird aufgerauht, von Staub, losen Teilen, Ausblühungen, Sinterschichten und anderen Trennmitteln befreit und in üblicher Weise vorgenässt.

Ein Trockenmörtel, bestehend aus Zement, Titandioxid, Microsilica und Calciumcarbonat gemäß der Erfindung wird mit einer entsprechenden Menge Wasser für pneumatische Förderung im Trockenspritz- und Estrichverfahren zubereitet. Dabei wird ein w/z-Wert von etwa 0,43 eingestellt. Diese Mischung wird in einer gewünschten Schichtdicke aufgebracht, wobei darauf zu achten ist, dass an der Oberfläche der w/z-Wert nicht durch Reiben oder glätten erhöht wird. Die Oberfläche wird dann mit Zement bepudert, wodurch sie sich verdichtet und so eine Porositätsabstufung eingestellt wird.

Dieser Vorgang kann je nach gewünschter Schichtdicke und gewünschten einzustellenden Porositätsgefällen mehrfach wiederholt werden.

## Patentansprüche

1. Beschichtung für mit Wasser in Kontakt stehende zementgebundene Untergründe, **dadurch gekennzeichnet, dass** die Beschichtung aus zementgebundenem Werkstoff mit einem Wasser/Zement-Wert von 0,4 bis 0,5 gebildet ist und im abgebundenen Zustand eine Schichtdicke d zwischen beschichtetem Untergrund und äußerer zum Wasser hin gerichteter Randzone der Beschichtung eine Porositätsabstufung derart aufweist, dass die äußere zum Wasser hin gerichtete Randzone der Beschichtung eine geringere Porosität aufweist als die restliche Schichtdicke, wobei die Porosität in der unverdichteten Schicht weniger als 10 Vol% beträgt.

2. Beschichtung nach Anspruch 1, **dadurch gekennzeichnet, dass** der zementgebundene Werkstoff für die Beschichtung weniger als 30 Gew.% Zement enthält.

3. Beschichtung nach Anspruch 2, **dadurch gekennzeichnet, dass** der Zement einen Gehalt an einer eine C₃S-Klinkerphase von mehr als 50 Gew.% aufweist.

4. Beschichtung nach einem der Ansprüche 2 oder 3, **dadurch gekennzeichnet, dass** der zementgebundene Werkstoff Calciumcarbonat als Zuschlagsstoff enthält.

5. Beschichtung nach Anspruch 4, **dadurch gekennzeichnet, dass** der Calciumcarbonatzuschlag Korngrößen einer Sieblinie zwischen 0,01 bis 3,00 mm umfasst.

6. Beschichtung nach einem der vorhergehenden Ansprüche, **dadurch gekennzeichnet, dass** der zementgebundene Werkstoff weniger als 1 Gew.% Microsilica umfasst.

7. Beschichtung nach einem der vorhergehenden Ansprüche, **dadurch gekennzeichnet, dass** der zementgebundene Werkstoff weniger als 5 Gew.% eines Pigmentfarbstoffes umfasst.

8. Beschichtung nach Anspruch 7, **dadurch gekennzeichnet, dass** die Schichtdicke d 10 bis 30 mm beträgt.

9. Beschichtung nach einem der Ansprüche 1 bis 8, **dadurch gekennzeichnet, daß** die Porosität in der unverdichteten Schicht 6 bis 8 Vol% beträgt.

10. Verfahren zur Verlangsamung oder Verhinderung der Auslaugung und hydrolytischen Korrosion von mit Wasser in Kontakt stehenden zementgebundenen Untergründen durch Ausbilden einer Beschichtung gemäß den Ansprüchen 1 bis 9 durch Auftragen einer Schicht d aus zementgebundenem Werkstoff, der auf einen Wasser/Zement-Wert von zwischen 0,4 bis 0,5 eingestellt ist, deren Porosität weniger als 10 Vol& beträgt und
anschließende Verringerung der Porosität einer äußeren zum Wasser hin gerichteten Randzone der Schicht d durch Bepudern der Oberfläche der unabgebundenen Schicht mit Zement, so dass eine Porositätsabstufung zwischen der äußeren Randzone und dem Inneren der Schicht derart ausgebildet wird, daß die äußere zum Wasser hingerichtete Randzone der Beschichtung eine geringere Porosität aufweist.

11. Verfahren nach Anspruch 10, **dadurch gekennzeichnet, dass** der zementgebundene Werkstoff Zement, Calciumcarbonat und Microsilica enthält.

12. Verfahren nach Anspruch 11, **dadurch gekennzeichnet, dass** der zementgebundenen Werkstoff Pigmentstoffe enthält.

## Claims

1. A coating for cement-bound substrates being in contact with water, **characterized in that** the coating is formed of cement-bound material having a water-cement ratio of 0.4 to 0.5 and in a cemented status a coating thickness d between coated substrate and a border zone of the coating facing the water has such a porosity gradation that the border zone of the coating facing the water has a porosity lower than the remaining coating thickness, wherein the porosity in the undensified coating is less than 10 vol.-%.

2. Coating according to claim 1, **characterized in that** the cement-bound material contains less than 30 wt% cement.

3. Coating according to claim 2, **characterized in that** the cement contains more than 50 wt.-% of a C₃S clinker phase.

4. Coating according to one of the claims 2 or 3, **characterized in that** the cement-bound material contains calcium carbonate as an aggregate.

5. Coating according to claim 4, **characterized in that** the calcium carbonate aggregate comprises grain sizes of a particle-size distribution curve between 0.01 to 3.00 mm.

6. Coating according to one of the preceding claims, **characterized in that** the cement bound material comprises less than 1 wt.-% micro silica.

7. Coating according to one of the preceding claims, **characterized in that** the cement-bound material comprises less than 5 wt.-% pigment dyestuff.

8. Coating according to claim 7, **characterized in that** the coating thickness d is 10 to 30 mm.

9. Coating according to claims 1 to 8, **characterized in that** the porosity in the undensified coating is 6 to 8 vol.-%.

10. A process for retarding or preventing washout and hydrolytic corrosion of cement-bound substrates being in contact with water by forming a coating according to claims 1 to 9 by
applying a coating d of a cement-bound material being adjusted to a water-cement ratio of between 0.4 to 0.5, the porosity of which is 10 vol.-%,
subsequently reducing the porosity of a border zone of the coating facing the water by powdering the surface of the non-bonded coating with cement, so that the porosity gradation between the border zone and the inside of the coating is such that the border zone of the coating facing the water has a lower porosity.

11. Process according to claim 10, **characterized in that** the cement-bound material contains cement, calcium carbonate and micro silica.

12. Process according to claim 11, **characterized in that** the cement-bound material contains pigment dyestuff.

## Revendications

1. Revêtement pour des substrats à liant au ciment qui sont en contact avec de l'eau, **caractérisé en ce que** le revêtement est formé d'un matériau à liant au ciment avec un rapport eau/ciment de 0,4 à 0,5 et présente dans l'état pris une épaisseur de couche d entre le substrat revêtu et la zone de bordure extérieure, dirigée vers l'eau, du revêtement, une gradation de porosité telle que la zone de bordure extérieure, dirigée vers l'eau, du revêtement présente une porosité plus faible que le reste de l'épaisseur de la couche, et la porosité dans la couche non compactée est inférieure à 10 % en volume.

2. Revêtement selon la revendication 1, **caractérisé en ce que** le matériau à liant au ciment pour le revêtement contient moins de 30 % en poids de ciment.

3. Revêtement selon la revendication 2, **caractérisé en ce que** le ciment présente une teneur de plus de 50 % en poids d'une phase de clinker à C₃S.

4. Revêtement selon l'une des revendications 2 ou 3, **caractérisé en ce que** le matériau à liant au ciment contient du carbonate de calcium à titre d'agent additionnel.

5. Revêtement selon la revendication 4, **caractérisé en ce que** l'addition de carbonate de calcium présente une granulométrie d'une ligne de criblage entre 0,01 et 3,00 mm.

6. Revêtement selon l'une des revendications précédentes, **caractérisé en ce que** le matériau à liant au ciment inclut moins de 1 % en poids de microsilice.

7. Revêtement selon l'une des revendications précédentes, **caractérisé en ce que** le matériau à liant au ciment inclut moins de 5 % en poids d'un colorant pigmenté.

8. Revêtement selon la revendication 7, **caractérisé en ce que** l'épaisseur de couche d est de 10 à 30 mm.

9. Revêtement selon l'une des revendications 1 à 8, **caractérisé en ce que** la porosité dans la couche non compactée est de 6 à 8 % en volumes.

10. Procédé pour ralentir ou pour empêcher le lessivage et la corrosion par hydrolyse de substrats à liant au ciment qui sont en contact avec de l'eau par réalisation d'un revêtement selon les revendications 1 à 9,
par application d'une couche d d'un matériau à liant au ciment qui est réglé à un rapport eau/ciment entre 0,4 et 0,5 et dont la porosité est inférieure à 10 % en volume, et par réduction successive de la porosité d'une couche de bordure extérieure, dirigée vers l'eau, de la couche d par poudrage avec du ciment de la surface de la couche non prise, de sorte il s'établit une gradation de porosité entre la zone de bordure extérieure et l'intérieur de la couche de telle façon que la zone de bordure extérieure, dirigée vers l'eau, du revêtement présente une porosité plus faible.

11. Procédé selon la revendication 10, **caractérisé en ce que** le matériau à liant au ciment contient du ciment, du carbonate de calcium et de la microsilice.

12. Procédé selon la revendication 11, **caractérisé en ce que** le matériau à liant au ciment contient des pigments.
